# EUROPÄISCHE PATENTSCHRIFT

(11) **EP 3 452 717 B1**
(45) Veröffentlichungstag und Bekanntmachung des Hinweises auf die Patenterteilung: **28.04.2021**
(21) Anmeldenummer: 17714220.5
(22) Anmeldetag: 29.03.2017
(51) Int. Cl.: F02M 26/21, F02M 26/70, F02M 26/64, F02M 26/35, F16K 11/052, F02D 9/10, F16K 27/02

(54) **REGELVORRICHTUNG**
CONTROL DEVICE
DISPOSITIF DE RÉGULATION

(30) Priorität: 06.05.2016 DE 102016108388
(43) Veröffentlichungstag der Anmeldung: 13.03.2019
(73) Patentinhaber: Pierburg GmbH, 41460 Neuss (DE)
(72) Erfinder: FASSBENDER, Ulrich, 41189 Mönchengladbach (DE); REIMERS, Thorsten, 41472 Neuss (DE); DAHLKE, Rainer, 41564 Kaarst (DE); SUTTY, Patrick, 40477 Düsseldorf (DE); KÜBBELER, Jean, 40589 Düsseldorf (DE)
(74) Vertreter: terpatent Patentanwälte ter Smitten Eberlein-Van Hoof Rütten Daubert
(86) Internationale Anmeldenummer: PCT/EP2017/057409
(87) Internationale Veröffentlichungsnummer: WO 2017/190892

(56) Entgegenhaltungen:
- EP-A1- 3 012 445
- DE-A1- 4 003 274
- DE-C- 687 882
- GB-A- 2 005 770
- JP-A- 2011 074 841
- US-A1- 2009 050 094

## Beschreibung

Die vorliegende Erfindung betrifft eine Regelvorrichtung für eine Verbrennungskraftmaschine mit einem Ansaugkanal, einem Abgasrückführkanal, der in den Ansaugkanal mündet, einem Gehäuse, in dem der Ansaugkanal und zumindest eine Mündung des Abgasrückführkanals ausgebildet sind, und einer als Drehachse dienenden Welle, die im Gehäuse bezüglich des Luftstroms stromaufwärts der Mündung des Abgasrückführkanals und senkrecht zu den Mittelachsen des Ansaugkanals und des Abgasrückführkanals angeordnet ist. Die Regelvorrichtung umfasst ferner einen Regelkörper, der an der Welle befestigt ist, über die der Regelkörper im Ansaugkanal drehbar ist, wobei der Regelkörper in einer ersten Endstellung den Ansaugkanal zumindest drosselt, und in einer zweiten Endstellung an einem Ventilsitz anliegt, in welcher der Regelkörper den Abgasrückführkanal verschließt.

Regelvorrichtungen werden in Verbrennungskraftmaschinen genutzt, um Abgas- oder Luftmengen zu regeln, die abgeführt oder der Verbrennung zugeführt werden sollen. Auch Kombinationen dieser Regelventile, bei denen zwei Ventilkörper über eine gemeinsame Stellvorrichtung betätigt werden, sind bekannt. Insbesondere wurden Kombinationen eines Abgasrückführventils mit einer Drosselklappe offenbart. Bei diesen Ausführungen mündet der Abgasrückführkanal unmittelbar stromabwärts der als Drosselventil dienenden Klappe in den Luftansaugkanal. Bei gewünschter Erhöhung der Abgasrückführrate wird dann mit Öffnen des Abgasrückführventils in gleichem Maße die Drosselklappe geschlossen, was eine Erhöhung des Druckgefälles im Abgasrückführkanal zur Folge hat, wodurch der Anteil des Abgases im Vergleich zur angesaugten Luftmenge erhöht wird. Eine derartige Anordnung wird beispielsweise in der DE 27 03 687 A1 offenbart.

Aus der DE 20 2014 100 190 U1 ist ebenfalls eine solche Regelvorrichtung bekannt. Die Regelvorrichtung weist eine erste Drosselklappe auf, welche ausgebildet ist, die durch einen Frischlufteinlass einströmende Frischluftmenge zu regeln. An der ersten Drosselklappe ist eine zweite Drosselklappe angeordnet, welche eine aus einem Abgaskanal einströmende Abgasmenge beeinflusst. Die Drosselklappen sind im Gehäuse im geschlossenen Zustand des Abgasrückführkanals derart angeordnet, dass die Klappen außerhalb des Durchströmquerschnitts des Luftkanals in einer Wanne angeordnet sind. Über die Wanne wird anfallendes Kondensat zum Abgaskanal geleitet. Das zum Abgaskanal geleitete Kondensat strömt bei Öffnung des Kanals in den Abgaskanal. Dort wird das Kondensat verdampft und strömt mit dem Abgas als Wasserdampf in den Luftkanal. Eine derartige Regelvorrichtung wird auch in der EP 3 012 445 A1 offenbart.

Des Weiteren ist aus der JP 2011 074841 A eine zwischen dem Abgasrückführkanal und dem Abgasauslasskanal angeordnete Klappe bekannt, an deren Wellenbereich eine Öffnung im Klappenkörper ausgebildet ist, um ein Ansammeln von Partikeln in diesem Bereich zu verhindern.

Auch ist aus der DE 40 03 274 A1 eine Drosselklappe bekannt, bei der in den Klappenkörper ein Loch oder zwei Löcher eingebracht werden, um einen Leerlaufdurchsatz festzulegen. Diese Löcher können zur genauen Mengenregelung des Leerlaufdurchsatzes aufgeweitet oder verengt werden.

Das an dem Abgaskanal gesammelte Kondensat kann bei einem Neustart des Motors als Eis vorliegen, so dass die zweite Drosselklappe, welche den Abgaskanal verschließt, mit einem Ventilsitz des Abgaskanals festgefroren sein kann. Ein Lösen der zweiten Drosselklappe ist dann erst bei Betriebstemperatur des Motors möglich. Eine Regelung durch die Regelvorrichtung ist somit während der Kaltstartphase nicht möglich.

Die Aufgabe der vorliegenden Erfindung liegt somit darin, eine Regelvorrichtung zu schaffen, mit welcher eine Bildung von Kondensattropfen an der Regelvorrichtung vermieden wird.

Diese Aufgabe wird durch eine Regelvorrichtung mit den Merkmalen des Anspruchs 1 gelöst.

Bei der erfindungsgemäßen Regelvorrichtung weist der Regelkörper einen Öffnungsbereich auf, welcher in der zweiten Endstellung des Regelkörpers in Strömungsrichtung zumindest teilweise vor der Mündung des Abgasrückführkanals angeordnet ist, und welcher in der ersten Endstellung innerhalb des Ansaugkanals angeordnet ist. Der Regelkörper weist eine erste Klappe, die den Ansaugkanal drosselt, und eine an der ersten Klappe befestigte zweite Klappe, die den Abgasrückführkanal verschließt, auf. Der Öffnungsbereich ist in der ersten Klappe angeordnet, die einen Strömungsleitkörper aufweist, welcher derart ausgebildet ist, dass ein durch den Öffnungsbereich strömender Luftstrom in Richtung einer stromabwärtigen Oberfläche der ersten Klappe ableitbar ist.

Ein Öffnungsbereich im Sinne der vorliegenden Erfindung ist ein Bereich, welcher die gegenüberliegenden Seiten des Regelkörpers fluidisch miteinander verbindet. Ein Strömungsleitkörper im Sinne der vorliegenden Erfindung ist ein Körper, welcher eine Strömung in eine vorbestimmte Richtung lenkt. Durch die Ausführung mit zwei Klappen kann die Anordnung der Ventilsitze zueinander mit deutlich ungenaueren Toleranzen erfolgen. Des Weiteren kann der Regelkörper vollständig aus dem durchströmten Bereich des Luftansaugkanals herausgedreht werden. Die erste Klappe ist die Klappe, welche direkt an dem Luftstrom anliegt. Mit einem Öffnungsbereich in der ersten Klappe kann somit auf effektivste Weise eine Kondensatbildung verhindert werden. Der Strömungsleitkörper unterstützt dabei eine gezielte Anströmung der in der zweiten Endstellung dem Abgasrückführkanal zugewandten Seite der ersten Klappe, im Folgenden eine als Klappenrückseite bezeichnete Seite. Dadurch wird die Ausbildung einer isolierenden Luftschicht an der ersten Klappe verbessert, so dass eine Bildung von Kondensat noch wirkungsvoller vermieden werden kann. Durch den Öffnungsbereich wird somit eine vom Luftstrom abgewandte Seite des Regelkörpers, welche in der zweiten Endstellung dem Abgasrückführkanal zugewandt ist, mit dem Luftstrom im Ansaugkanal verbunden. Dadurch wird eine Strömung des Regelkörpers auch entlang einer in der zweiten Endstellung dem Abgasrückführkanal zugewandten Seite des Regelkörpers hervorgerufen. Diese Strömung entlang des Regelkörpers erzeugt eine isolierende Luftschicht, welche einen Kontakt des Abgases mit dem gegebenenfalls kalten Regelkörper verhindert. Dadurch wird eine Kondensation des Wassers aus dem heißen Abgas an dem Regelkörper vermieden. Es werden somit an dem Regelkörper keine Kondensattropfen gebildet, welche von der Strömung mitgerissen werden, und welche dauerhaft den Verdichter beschädigen.

In einer bevorzugten Ausführungsform der Erfindung ist die Welle außerhalb des Durchströmungsquerschnittes angeordnet. Gemäß der vorliegenden Erfindung ist der Durchströmungsquerschnitt der Querschnitt im Gehäuse, welcher von dem Luftstrom aus dem Ansaugkanal hauptsächlich durchströmt wird. Durch diese Anordnung kann der Luftstrom, insbesondere in einer zweiten Endstellung des Regelkörpers, in welcher der Regelkörper an dem Ventilsitz des Abgasrückführkanal anliegt, ungehindert zum Verdichter strömen.

In einer weiteren bevorzugten Ausführungsform ist der Regelkörper exzentrisch an der Welle befestigt. Durch eine exzentrische Anordnung des Regelkörpers zur Welle, kann die Welle beabstandet zum Regelkörper angeordnet werden. Dadurch kann die Welle variable zum Regelkörper im Gehäuse positioniert werden. Beispielsweise ist dadurch eine Anordnung möglich, bei welcher die Welle außerhalb des Durchströmungsquerschnittes angeordnet ist.

Bei einer bevorzugten Ausgestaltung der Erfindung liegt der Regelkörper in der ersten Endstellung, in welcher der Regelkörper den Ansaugkanal verschließt, an einem Ansaugkanal-Ventilsitz an. Dadurch kann eine vollständige Regelung des Luftstromes durchgeführt werden.

In einer weiterführenden Ausführungsform ist der Strömungsleitkörper in der den Ansaugkanal drosselnden Stellung des Regelkörpers stromabwärts des Öffnungsbereiches angeordnet, wobei eine Öffnung zwischen dem Strömungsleitkörper und einer den öffnungsbereich begrenzenden Kante der ersten Klappe zur Erstreckungsrichtung der ersten Klappe weist. Die spezielle Ausbildung des Strömungsleitkörpers lenkt die Strömung direkt an die Klappenrückseite der ersten Klappe und verbessert dadurch die isolierende Luftschicht an der ersten Klappe, so dass eine Bildung von Kondensat noch wirkungsvoller vermieden werden kann.

Vorzugsweise ist ein Klappenkörper der ersten Klappe mit dem Strömungsleitkörper einteilig hergestellt und der Strömungsleitkörper durch einseitiges Lösen vom Klappenkörper und Umformen ausgeformt. Die Herstellung des Strömungsleitkörpers wird dadurch vereinfacht, so dass die Regelvorrichtung wirtschaftlich herstellbar ist.

Der Öffnungsbereich ist vorzugsweise als Schlitz ausgeformt. Ein Schlitz im Sinne der vorliegenden Erfindung ist eine Öffnung deren Länge ein Vielfaches der Breite beträgt. Durch die Auswahl der Schlitzbreite und der Schlitzlänge werden die Größe der zu überströmenden Fläche und die isolierende Luftschichtdicke festgelegt.

In einer weiterführenden Ausbildung der Erfindung weist der Schlitz des Regelkörpers eine Breite von mindestens 2mm auf. Mit einer solchen Breite kann eine ausreichende isolierende Strömung des Regelkörpers auf einer Rückseite sichergestellt werden.

In einer hierzu weiterführenden vorteilhaften Ausführung weist der Schlitz des Regelkörpers eine Länge von mindestens dem Durchmesser des Ventilsitzes des Abgasrückführkanals auf. Dadurch wird der Regelkörper zumindest in einem Bereich von dem Luftstrom überströmt, welcher auch von dem heißen Abgas angeströmt wird.

Vorzugsweise ist der Schlitz teilkreisförmig, weist einen Schlitzdurchmesser auf, welcher größer ist als der Durchmesser des Ventilsitzes des Abgasrückführkanals, und ist in einem Schließzustand des Abgasrückführkanals auf einer strömungsaufwärts liegenden Klappenhälfte der ersten Klappe angeordnet. Durch die spezielle Anordnung des Schlitzes wird eine isolierende Luftschicht in dem Bereich der kalten Klappe gebildet, welcher ohne den Schlitz sonst in Kontakt mit dem heißen Abgas kommen würde. Dadurch wird eine Bildung von Kondensattropfen in diesem Bereich vermieden.

Die erfindungsgemäße Regelvorrichtung hat somit den Effekt, dass die Luftschicht an der Klappenrückseite das Auftreffen des feuchten und heißen Abgasstroms an der kalten Klappe verhindert. Dadurch wird eine Bildung von Kondensattropfen vermieden, so dass eine langfristige Beschädigung des Verdichters durch Kondensattropfen verhindert wird. Weitere Einzelheiten und Vorteile der vorliegenden Erfindung ergeben sich aus der nachfolgenden Beschreibung der Ausführungsbeispiele in Verbindung mit den Zeichnungen. In diesen zeigen:
- Figur 1:: Seitenansicht einer erfindungsgemäßen Regelvorrichtung (ohne Strömungsleitkörper) mit einem Regelkörper in einer ersten Endstellung in geschnittener Darstellung,
- Figur 2:: Seitenansicht der erfindungsgemäßen Regelvorrichtung (ohne Strömungsleitkörper) aus Figur 1 mit einem Regelkörper in einer Mittelposition in geschnittener Darstllung,
- Figur 3:: Seitenansicht der erfindungsgemäßen Regelvorrichtung aus Figur 1 mit einem Regelkörper, welcher einen Strömungsleitkörper aufweist, in einer zweiten Endstellung in geschnittener Darstellung, und
- Figur 4:: Draufsicht auf eine Ausführungsform des erfindungsgemäßen Regelkörpers.

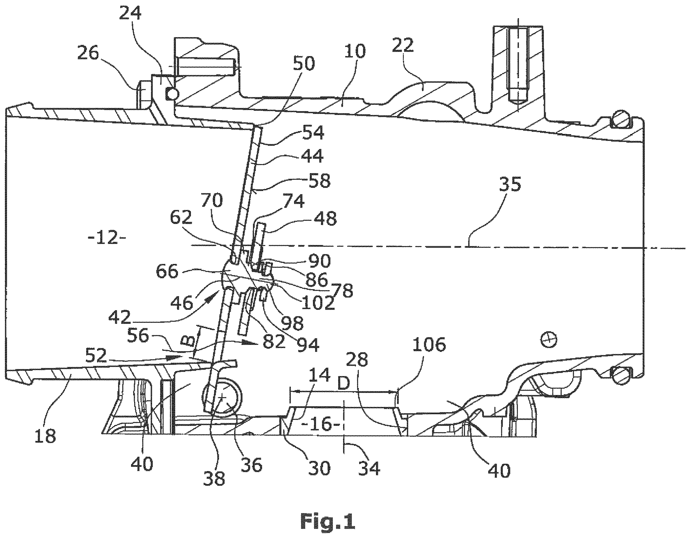

Figur 1 zeigt eine Regelvorrichtung (ohne Strömungsleitkörper) nach einem ersten Ausführungsbeispiel. Die erfindungsgemäße Regelvorrichtung bestht aus einem Gehäuse 10, welches einen Ansaugkanal 12 begrenzt und in dem eine Mündung 14 eines Abgasrückführkanals 16 ausgebildet ist. Der Ansaugkanal 12 verläuft im Wesentlichen in gerader Richtung, während der Abgasrückführkanal 16 senkrecht zum Ansaugkanal 12 in diesen mündet.

Das Gehäuse 10 besteht aus einem ersten im Wesentlichen rohrförmig ausgebildeten Gehäuseteil 18. Dieses erste Gehäuseteil 18 ist im Innern eines zweiten Gehäuseteils 22 angeordnet, beziehungsweise wird in das zweite Gehäuseteil 22 bis zur Anlage eines Flansches 24 eingeschoben, über den das erste Gehäuseteil 18 mittels Schrauben 26 am zweiten Gehäuseteil 22 befestigt ist. Das zweite Gehäuseteil 22 weist eine Öffnung 28 auf, welche in Strömungsrichtung in kurzem Abstand hinter einem axialen Ende des ersten Gehäuseteils 18 angeordnet ist und welches als Aufnahme für ein drittes Gehäuseteil 30 dient, welches die Mündung 14 des Abgasrückführkanals 16 bildet, dessen Mittelachse 34 senkrecht zur Mittelachse 35 des Ansaugkanals 12 angeordnet ist.

Im Gehäuse 10 ist eine Welle 36 drehbar angeordnet, die über einen nicht sichtbaren Aktor betätigt werden kann. Die Drehachse 38 dieser Welle 36 ist senkrecht zu den Mittelachsen 34, 35 angeordnet und befindet sich zwischen der zur Welle 36 stromabwärtigen Mündung 14 des Abgasrückführkanals 16 und dem axialen Ende des ersten Gehäuseteils 18 und unmittelbar stromabwärts des ersten Gehäuseteils 18. Der Durchströmungsquerschnitt des ersten Gehäuseteils 18 ist kleiner als der des zweiten Gehäuseteils 22 des Ansaugkanals 12, wobei das erste Gehäuseteil 18 derart am zweiten Gehäuseteil 22 befestigt ist, dass eine im Bereich der Mündung des Abgasrückführkanals 16 ausgebildete Ausnehmung 40 außerhalb des Durchströmungsquerschnitts angeordnet ist, in der die Welle 36, das zweite Gehäuseteil 22 durchdringend, angeordnet ist.

An dieser exzentrisch im Ansaugkanal 12 angeordneten Welle 36 ist ein Regelkörper 42 befestigt, der aus einer ersten Klappe 44 sowie einer über eine Halteachse 46 an der ersten Klappe 44 befestigten zweiten Klappe 48 besteht. Die erste Klappe 44 erstreckt sich gerade von der Welle 36 aus und beherrscht den Durchströmungsquerschnitt des Ansaugkanals 12. Hierzu wirkt die erste Klappe 44 mit dem axialen Ende des ersten Gehäuseteils 18 zusammen, das als Ansaugkanal-Ventilsitz 50 dient, auf dem die erste Klappe 44 im den Ansaugkanal 12 verschließenden Zustand, wie er in Figur 1 dargestellt ist, anliegt.

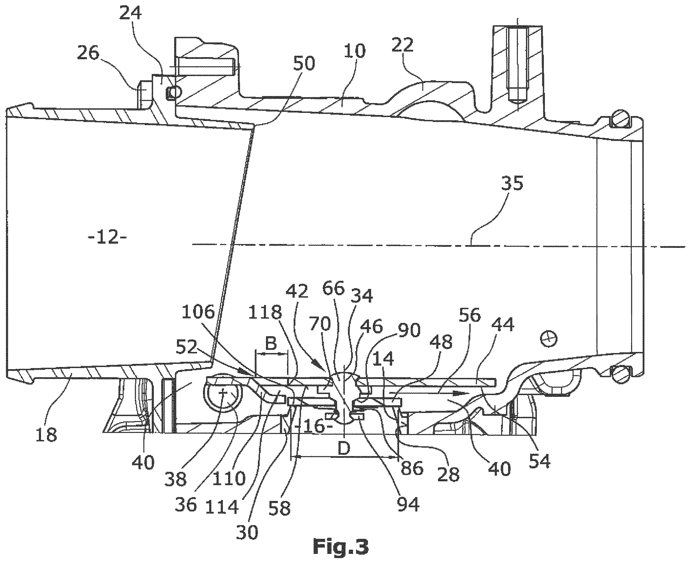

Die erste Klappe 44 weist einen in der zweiten Endstellung (siehe Figur 3) des Regelkörpers 42 in Strömungsrichtung vor der Mündung 14 angeordneten, als Schlitz ausgeformten, Öffnungsbereich 52 auf. Der Öffnungsbereich 52 ist derart in der ersten Klappe 44 ausgebildet, dass der Öffnungsbereich 52 in der ersten Endstellung (siehe Figur 1) innerhalb des Ansaugkanals 12 angeordnet ist. Der als Schlitz ausgeformte Öffnungsbereich 52 weist eine Breite B auf. Durch den Öffnungsbereich 52 bildet sich, an einer Klappenrückseite 54 der ersten Klappe 44, eine Strömung 56 aus, welche eine Oberfläche 58 der ersten Klappe 44 vor dem heißen Abgas isoliert und so ein Anströmen der kalten Klappe 44 verhindert. Dadurch wird eine Kondensation des Wassers in dem heißen Abgas an der ersten Klappe 44 vermieden.

In der ersten Klappe 44 ist im zentralen Bereich eine Bohrung 62 ausgebildet, in der die Halteachse 46 befestigt ist. Diese erstreckt sich zur zum ersten Gehäuseteil 18 gegenüberliegenden Seite senkrecht zur ersten Klappe 44. Die Halteachse 46 weist mehrere axial hintereinanderliegende Abschnitte unterschiedlicher Durchmesser auf, von denen ein erster Abschnitt 66 die Bohrung 62 durchdringt und im hinteren Bereich zur Erzeugung einer Nietverbindung umgeformt ist und der zweite, größere Abschnitt 70 flächig gegen die erste Klappe 44 anliegt. Ein dritter axialer Abschnitt 74 weist einen kleineren Durchmesser als der zweite Abschnitt 70 auf, gefolgt von einem vierten Abschnitt 78 mit wiederum verkleinertem Durchmesser. Auf diesem vierten Abschnitt 78 ist die zweite Klappe 48 angeordnet, welche eine zentrale Öffnung 82 aufweist, durch die die Halteachse 46 dringt, wobei der Durchmesser dieser Öffnung 82 etwas größer ist als der Durchmesser des vierten Abschnitts 78, wodurch die zweite Klappe 48 auf der Halteachse 46 leicht gekippt werden kann. Eine Feder 86 umgibt ebenfalls den vierten Abschnitt 78 und drückt die Klappe 48 gegen einen als Anschlag 90 dienenden kugeligen Absatz zwischen dem dritten Abschnitt 74 und dem vierten Abschnitt 78. Als Widerlager für diese Feder 86 dient eine Scheibe 94, welche auf einem fünften Abschnitt 98 der Halteachse 46 angeordnet ist, wo sie durch Umformen, eines die Scheibe 94 durchdringenden folgenden Abschnitts 102 der Halteachse 46 befestigt wird. Diese Befestigung der zweiten Klappe 48 führt dazu, dass bei Drehung der Welle 36 in der zweite Endstellung, wie sie in Figur 3 dargestellt ist, in der die zweite Klappe 48 auf der als Ventilsitz 106 dienenden Mündung 14 des Abgasrückführkanals 16 aufliegt, ein vollständiger dichter Verschluss des Abgasrückführkanals 16 erfolgt, da die Klappe 48 ihre Stellung durch die mögliche Kippbewegung an die Lage des Ventilsitzes 106 des Abgasrückführkanals 16 anpassen kann, auch wenn dieser nicht vollständig parallel zur Mittelachse 35 des Ansaugkanals 12 ausgebildet ist.

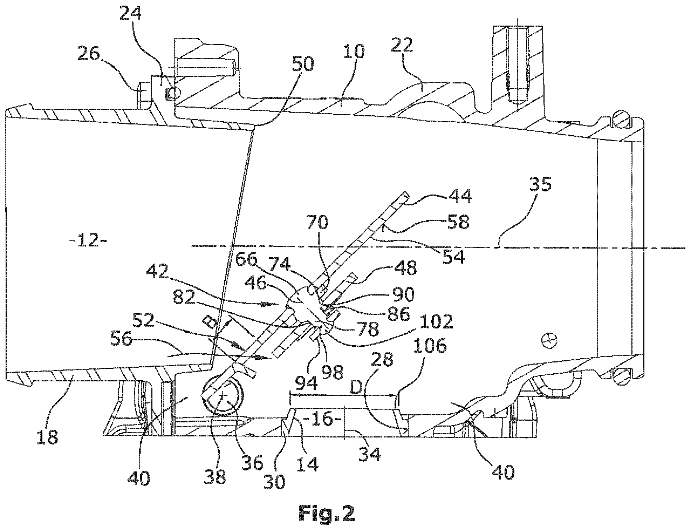

Abweichend zu den Figuren 1 und 2, weist die erste Klappe 44 erfindungsgemäß in Figur 3 einen Strömungsleitkörper 110 auf. Der Strömungsleitkörper 110 ist einteilig mit dem Klappenkörper der ersten Klappe 44, durch einseitiges Lösen vom Klappenkörper und Umformen, ausgeformt. Der Strömungsleitkörper 110 ist derart umgeformt, dass er die Klappenrückseite 54 der ersten Klappe 44 überragt, wobei eine Öffnung 114 zwischen dem Strömungsleitkörper 110 und einer den Öffnungsbereich 52 begrenzenden Kante 118 der ersten Klappe 44 zur Erstreckungsrichtung der ersten Klappe 44 weist. Dadurch wird ein durch den Öffnungsbereich 52 strömender Luftstrom auf die Oberfläche 58 der Klappenrückseite 54 der ersten Klappe 44 abgeleitet.

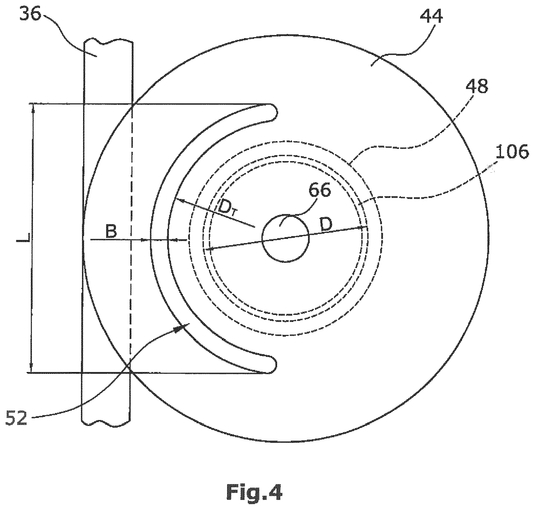

Figur 4 zeigt eine Draufsicht auf die erste Klappe 44 des Regelkörpers 42 der Regelvorrichtung. In der ersten Klappe 44 ist der als Schlitz ausgeformte Öffnungsbereich 52 teilkreisförmig ausgebildet. Ein Teilkreisdurchmesser D_{T} des teilkreisförmigen Öffnungsbereiches 52 ist größer als der Durchmesser D des Ventilsitzes 106 des Abgasrückführkanals 16. Eine Länge L des Öffnungsbereiches 52 senkrecht zur Strömungsrichtung ist größer als der Durchmesser D des Ventilsitzes 106 des Abgasrückführkanals 16.

### Bezugszeichenliste

- 10: Gehäuse
- 12: Ansaugkanal
- 14: Mündung
- 16: Abgasrückführkanal
- 18: erste Gehäuseteil
- 22: zweite Gehäuseteil
- 24: Flansch
- 26: Schrauben
- 28: Öffnung
- 30: drittes Gehäuseteil
- 34: Mittelachse Abgasrückführkanal
- 35: Mittelachse Ansaugkanal
- 36: Welle
- 38: Drehachse
- 40: Ausnehmung
- 42: Regelkörper
- 44: erste Klappe
- 46: Halteachse
- 48: zweite Klappe
- 50: Ansaugkanal-Ventilsitz
- 52: Öffnungsbereich
- 54: Klappenrückseite
- 56: Strömung
- 58: Oberfläche
- 62: Bohrung
- 66: erster Abschnitt
- 70: zweite Abschnitt
- 74: dritter Abschnitt
- 78: vierten Abschnitt
- 82: zentrale Öffnung
- 86: Feder
- 90: Anschlag
- 94: Scheibe
- 98: fünfter Abschnitt
- 102: Abschnitt
- 106: Ventilsitz
- 110: Strömungsleitkörper
- 114: Öffnung
- 118: Kante
- B: Breite
- D: Durchmesser
- L: Länge
- D_{T}: Teilkreisdurchmesser

## Patentansprüche

1. Regelvorrichtung für eine Verbrennungskraftmaschine mit
- einem Ansaugkanal (12),
- einem Abgasrückführkanal (16), der in den Ansaugkanal (12) mündet,
- einem Gehäuse (10), in dem der Ansaugkanal (12) und zumindest eine Mündung (14) des Abgasrückführkanals (16) ausgebildet sind,
- einer als Drehachse (38) dienenden Welle (36), die im Gehäuse (10) bezüglich des Luftstroms stromaufwärts der Mündung (14) des Abgasrückführkanals (16) und senkrecht zu den Mittelachsen (34, 35) des Ansaugkanals (12) und des Abgasrückführkanals (16) angeordnet ist,
- einem Regelkörper (42), der an der Welle (36) befestigt ist, über die der Regelkörper (42) im Ansaugkanal (12) drehbar ist, wobei der Regelkörper (42) in einer ersten Endstellung den Ansaugkanal (12) zumindest drosselt, und in einer zweiten Endstellung an einem Ventilsitz (106) anliegt, in welcher der Regelkörper (42) den Abgasrückführkanal (16) verschließt, wobei der Regelkörper (42) einen Öffnungsbereich (52) aufweist, welcher in der zweiten Endstellung des Regelkörpers (42) in Strömungsrichtung zumindest teilweise vor der Mündung (14) des Abgasrückführkanals (16) angeordnet ist, und welcher in der ersten Endstellung innerhalb des Ansaugkanals (12) angeordnet ist,
**dadurch gekennzeichnet, dass**
der Regelkörper (42) eine erste Klappe (44), die den Ansaugkanal (12) drosselt, und eine an der ersten Klappe (44) befestigte zweite Klappe (48), die den Abgasrückführkanal (16) verschließt, aufweist, wobei der Öffnungsbereich (52) in der ersten Klappe (44) angeordnet ist, welche einen Strömungsleitkörper (110) aufweist, welcher derart ausgebildet ist, dass ein durch den Öffnungsbereich (52) strömender Luftstrom in Richtung einer stromabwärtigen Oberfläche (58) der ersten Klappe (44) ableitbar ist.

2. Regelvorrichtung nach Anspruch 1, **dadurch gekennzeichnet, dass** die Welle (36) außerhalb des Durchströmungsquerschnittes angeordnet ist.

3. Regelvorrichtung nach Anspruch 1 oder 2, **dadurch gekennzeichnet, dass** der Regelkörper (42) exzentrisch an der Welle (36) befestigt ist.

4. Regelvorrichtung nach einem der vorherigen Ansprüche, **dadurch gekennzeichnet, dass** der Regelkörper (42) in der ersten Endstellung, in welcher der Regelkörper (42) den Ansaugkanal (12) verschließt, an einem Ansaugkanal-Ventilsitz (50) anliegt.

5. Regelvorrichtung nach einem der vorherigen Ansprüche, **dadurch gekennzeichnet, dass** der Strömungsleitkörper (110) in der den Ansaugkanal (12) drosselnden Stellung des Regelkörpers (42) stromabwärts des Öffnungsbereiches (52) angeordnet ist, wobei eine Öffnung (114) zwischen dem Strömungsleitkörper (110) und einer den Öffnungsbereich (52) begrenzenden Kante (118) der ersten Klappe (44) zur Erstreckungsrichtung der ersten Klappe (44) weist.

6. Regelvorrichtung nach einem der vorherigen Ansprüche, **dadurch gekennzeichnet, dass** ein Klappenkörper der ersten Klappe (44) mit dem Strömungsleitkörper (110) einteilig hergestellt ist und der Strömungsleitkörper (110) durch einseitiges Lösen vom Klappenkörper und Umformen ausgeformt ist.

7. Regelvorrichtung nach einem der vorherigen Ansprüche, **dadurch gekennzeichnet, dass** der Öffnungsbereich (52) als Schlitz ausgeformt ist.

8. Regelvorrichtung nach Anspruch 7, **dadurch gekennzeichnet, dass** der Schlitz des Regelkörpers (42) eine Breite (B) von mindestens 2mm aufweist.

9. Regelvorrichtung nach Anspruch 7 oder 8, **dadurch gekennzeichnet, dass** der Schlitz des Regelkörpers (42) eine Länge (L) von mindestens dem Durchmesser (D) des Ventilsitzes (106) des Abgasrückführkanals (16) aufweist.

10. Regelvorrichtung nach einem der Ansprüche 7 bis 9, **dadurch gekennzeichnet, dass** der Schlitz teilkreisförmig ist, wobei der Teilkreis einen Teilkreisdurchmesser (D_{T}) aufweist, welcher größer ist als der Durchmesser (D) des Ventilsitzes (106) des Abgasrückführkanals (16), und der Schlitz in einem Schließzustand des Abgasrückführkanals (16) auf einer strömungsaufwärts liegenden Klappenhälfte der ersten Klappe (44) angeordnet ist.

## Claims

1. Control device for an internal combustion engine comprising
- an intake channel (12),
- an exhaust gas recirculation channel (16) opening into the intake channel (12),
- a housing (10) in which the intake channel (12) and at least one mouth (14) of the exhaust gas recirculation channel (16) are formed,
- a shaft (36) acting as an axis of rotation (38), said shaft being arranged in the housing (10), with respect to the air flow, upstream of the mouth (14) of the exhaust gas recirculation channel (16) and perpendicular to the central axes (34, 35) of the intake channel (12) and the exhaust gas recirculation channel (16),
- a control body (42) attached to the shaft (36) via which the control body (42) can be rotated in the intake channel (12), the control body (42) at least throttling the intake channel (12) in a first end position, and resting against a valve seat (106) in a second end position in which the control body (42) closes the exhaust gas recirculation channel (16),
the control body (42) has an opening region (52) which, in the second end position of the control body (42), is arranged at least in part in front of the mouth (14) of the exhaust gas recirculation channel (16) in the flow direction, and which, in the first end position, is arranged within the intake channel (12),
**characterized in that**
the control body (42) comprises a first flap (44) throttling the intake channel (12), and a second flap (48) fastened to the first flap (44), said second flap closing the exhaust gas recirculation channel (16), the opening region (52) being arranged in the first flap (44) which comprises a flow guide body (110) which is configured such that an air flow flowing through the opening region (52) can be deflected in the direction of a downstream surface (58) of the first flap (44).

2. Control device according to claim 1, **characterized in that** the shaft (36) is arranged outside the flow cross-section.

3. Control device according to claim 1 or 2, **characterized in that** the control body (42) is mounted eccentrically on the shaft (36).

4. Control device according to one of the preceding claims, **characterized in that** in the first end position, in which the control body (42) closes the intake channel (12), the control body (42) rests on an intake channel valve seat (50).

5. Control device according to one of the preceding claims, **characterized in that** in the position of the control body (42) in which it throttles the intake channel (12), the flow guide body (110) is arranged downstream of the opening region (52), wherein an opening (114) between the flow guide body (110) and an edge (118) of the first flap (44) delimiting the opening region (52) faces in the direction of extension of the first flap (44).

6. Control device according to one of the preceding claims, **characterized in that** a flap body of the first flap (44) is formed integrally with the flow guide body (110), and the flow guide body (110) is formed by releasing the same from the flap body on one side and reshaping.

7. Control device according to one of the preceding claims, **characterized in that** the opening region (52) is formed as a slot.

8. Control device according to claim 7, **characterized in that** the slot of the control body (42) has a width (B) of at least 2 mm.

9. Control device according to claim 7 or 8, **characterized in that** the slot of the control body (42) has a length (L) of at least the diameter (D) of the valve seat (106) of the exhaust gas recirculation channel (16).

10. Control device according to one of claims 7 to 9, **characterized in that** the slot is pitch-circle shaped, the pitch circle having a pitch circle diameter (D_{T}) which is larger than the diameter (D) of the valve seat (106) of the exhaust gas recirculation channel (16), and the slot is arranged on an upstream flap half of the first flap (44), when the exhaust gas recirculation channel (16) is in a closed state.

## Revendications

1. Dispositif de réglage pour un moteur à combustion interne comprenant
- un canal d'aspiration (12),
- un canal de recirculation des gaz d'échappement (16) s'ouvrant dans le canal d'aspiration (12),
- un carter (10) dans lequel sont formés le canal d'aspiration (12) et au moins une embouchure (14) du canal de recirculation des gaz d'échappement (16),
- un arbre (36) faisant office d'axe de rotation (38), par rapport au flux d'air, l'arbre étant disposé dans le carter (10) en amont de l'embouchure (14) du canal de recirculation des gaz d'échappement (16) et perpendiculaire au des axes centraux (34, 35) du canal d'aspiration (12) et le canal de recirculation des gaz d'échappement (16),
- un corps de réglage (42) fixé à l'arbre (36) par l'intermédiaire duquel arbre le corps de réglage (42) peut tourner dans le canal d'aspiration (12), le corps de réglage (42) étranglant au moins le canal d'aspiration (12) dans une première position d'extrémité, et dans une deuxième position d'extrémité dans laquelle le corps de réglage (42) ferme le canal de recirculation des gaz d'échappement (16), le corps de réglage s'appuie sur un siège de soupape (106),
le corps de réglage (42) présentant une zone d'ouverture (52) qui, dans la deuxième position d'extrémité du corps de réglage (42), est au moins partiellement disposé, en la direction d'écoulement, en avant de l'embouchure (14) du canal de recirculation des gaz d'échappement (16), et qui, dans la première position d'extrémité, est dispose à l'intérieur du canal d'aspiration (12),
**caractérisé en ce que**
le corps de réglage (42) présente un premier volet (44) étranglant le canal d'aspiration (12), et un deuxième volet (48) monté sur le premier volet (44) et fermant le canal de recirculation des gaz d'échappement (16), la zone d'ouverture (52) étant disposée dans le premier volet (44) qui présente un corps de guidage d'écoulement (110) qui est réalisé tellement qu'un flux d'air circulant à travers la zone d'ouverture (52) peut être dérivé en direction d'une surface aval (58) du premier volet (44).

2. Dispositif de réglage selon la revendication 1, **caractérisé en ce que** l'arbre (36) est disposé à l'extérieur de la section transversale d'écoulement.

3. Dispositif de réglage selon la revendication 1 ou 2, **caractérisé en ce que** le corps de réglage (42) est monté excentriquement sur l'arbre (36).

4. Dispositif de réglage selon l'une quelconque des revendications précédentes, **caractérisé en ce que** dans la première position d'extrémité, dans laquelle le corps de réglage (42) ferme le canal d'aspiration (12), le corps de réglage (42) s'appuie sur un siège de soupape de canal d'aspiration (50).

5. Dispositif de réglage selon l'une quelconque des revendications précédentes, **caractérisé en ce que** dans la position du corps de réglage (42) étranglant le canal d'aspiration (12), le corps de guidage d'écoulement (110) est disposé en aval de la zone d'ouverture (52), une ouverture (114) entre le corps de guidage d'écoulement (110)) et un bord (118) du premier rabat (44) délimitant la zone d'ouverture (52) étant orientée dans la direction d'extension du premier volet (44).

6. Dispositif de réglage selon l'une quelconque des revendications précédentes, **caractérisé en ce qu'**un corps de volet du premier volet (44) est réalisé d'une seule pièce avec le corps de guidage d'écoulement (110) et le corps de guidage d'écoulement (110) est formé en le dégageant du corps à rabat d'un côté et le remodelant.

7. Dispositif de réglage selon l'une quelconque des revendications précédentes, **caractérisé en ce que** la zone d'ouverture (52) présente la forme d'une fente.

8. Dispositif de réglage selon la revendication 7, **caractérisé en ce que** la fente du corps de réglage (42) a une largeur (B) d'au moins 2 mm.

9. Dispositif de réglage selon la revendication 7 ou 8, **caractérisé en ce que** la fente du corps de réglage (42) a une longueur (L) au moins égale au diamètre (D) du siège de soupape (106) du canal de recirculation des gaz d'échappement (16).

10. Dispositif de réglage selon l'une des revendications 7 à 9, **caractérisé en ce que** la fente présente la forme d'un cercle partiel, le cercle partiel ayant un diamètre de cercle partiel (D_{T}) supérieur au diamètre (D) du siège de soupape (106) dudit canal de recirculation des gaz d'échappement (16), et la fente est disposée sur une moitié de volet du premier volet (44) en amont lorsque le canal de recirculation des gaz d' échappement (16) est dans un état fermé.
